(19) Europäisches Patentamt
European Patent Office
Office européen des brevets

(11) **EP 0 800 642 B1**

(12) **EUROPÄISCHE PATENTSCHRIFT**

(45) Veröffentlichungstag und Bekanntmachung des Hinweises auf die Patenterteilung:
**03.04.2002 Patentblatt 2002/14**

(51) Int Cl.⁷: $G01C\ 19/56$, G01C 25/00

(21) Anmeldenummer: **95940960.8**

(22) Anmeldetag: **15.12.1995**

(86) Internationale Anmeldenummer:
**PCT/DE95/01796**

(87) Internationale Veröffentlichungsnummer:
**WO 96/21138 (11.07.1996 Gazette 1996/31)**

(54) **VORRICHTUNG ZUR ERMITTLUNG EINER DREHRATE**

DEVICE FOR DETERMINING TURN RATE

APPAREIL DE DETERMINATION D'UN TAUX DE VIRAGE

(84) Benannte Vertragsstaaten:
**AT DE FR GB**

(30) Priorität: **29.12.1994 DE 4447005**

(43) Veröffentlichungstag der Anmeldung:
**15.10.1997 Patentblatt 1997/42**

(73) Patentinhaber: **ROBERT BOSCH GMBH**
**70442 Stuttgart (DE)**

(72) Erfinder:
• **PFAFF, Georg**
**D-71706 Markgröningen (DE)**

• **ERHARDT, Rainer**
**D-70563 Stuttgart (DE)**
• **ARTZNER, Johannes**
**D-72764 Reutlingen (DE)**
• **BAUER, Wolfram**
**D-72074 Tübingen (DE)**

(56) Entgegenhaltungen:
EP-A- 0 462 580        EP-A- 0 638 782
US-A- 4 654 582        US-A- 4 759 220

**Beschreibung**

Stand der Technik

Die Erfindung geht aus von einer Vorrichtung zur Ermittlung einer Drehrate nach der Gattung des Hauptanspruchs.

Die Verwendung von Drehratensensoren, die beispielsweise nach dem Prinzip eines Vibrationsgyrometers arbeiten, ist im Zusammenhang mit Systemen zur Fahrdynamikregelung bei Kraftfahrzeugen bereits bekannt. Solche Sensoren werten den Effekt der Coriolisbeschleunigung aus, die als Maß für die aktuelle Giergeschwindigkeit des Fahrzeuges dient.

Die Beschreibung eines solchen Drehratensensors ist beispielsweise der US-PS 4 759 220 zu entnehmen. In dieser Druckschrift wird der typische Aufbau eines solchen Sensors sowie die zugehörige Auswerteschaltung näher erläutert. Dieser Sensor ist im wesentlichen ein dünnwandiger Hohlzylinder aus elastischem Material. Auf der Zylinderwand sind mehrere piezoelektrische Sensorelemente angebracht, wobei jeweils zwei der Sensorelemente einander gegenüberliegen. Diese Sensorelemente werden mit Hilfe einer Oszillatorschleife in konstante mechanische Antriebsschwingungen versetzt. Der Corioliseffekt bewirkt zusammen mit einer senkrecht zur Antriebsschwingung eingekoppelten Drehgeschwindigkeit eine Coriolisbeschleunigung, die eine Auslenkung der Antriebsschwingung in Coriolisrichtung zur Folge hat. Diese Auslenkung ist ein Maß für die eingekoppelte Drehrate. Die entstehende Ausgangsspannung wird mit Hilfe eines Detektorschaltkreises ermittelt und letztendlich zur Bestimmung der Drehrate herangezogen.

Der aus der US-PS 4 759 220 bekannte Sensor einschließlich der zugehörigen Auswerteschaltung hat den Nachteil, dass eine Fehlfunktion nicht ohne Weiteres erkennbar ist. Wird ein solcher Sensor im Zusammenhang mit sicherheitsrelevanten Systemen in einem Kraftfahrzeug eingesetzt, ist es erforderlich, dass die Funktionsfähigkeit überprüft wird.

Aus der zum Anmeldezeitpunkt noch nicht veroffentlichten Druckschrift EP 0 638 782 A1 sind Vorrichtungen zur Ermittlung einer Drehrate bekannt, die Drehratensensoren mit zugehörigen Auswerteschaltungen umfassen. Dabei kann die Drehrate ermittelt und gleichzeitig die Funktionsfahigkeit geprüft werden. Die Sensoren weisen dabei mehrere Sensorelemente auf, die auf einem schwingungsfahigen Körper liegen und mittels einer eine Oszillatorschleife umfassenden Anregungsstufe zu Schwingungen angeregt werden. Die sich einstellende Ausgangsspannung ist ein Maß fur die zu ermittelnde Drehrate. Zur Erkennung einer Fehlfunktion wird ein Offsetsignal der Vorrichtung und zu einer Ausgangsspannung führt, die eine Überlagerung aus Drehrate und Offset ist und zur Fehlererkennung ausgewertet wird.

Vorteile der Erfindung

Die erfindungsgemäßen Vorrichtungen zur Ermittlung einer Drehrate haben gegenuber der bekannten Losung den Vorteil, dass eine Fehlfunktion des Sensors zuverlassig erkannt wird. Besonders vorteilhaft ist dabei, dass nur ein geringer Zusatzaufwand erforderlich ist und als Folge der sicheren Sensorüberwachung der Aufwand für redundante Sensoren deutlich reduziert werden kann.

Erzielt werden diese Vorteile, indem in die Kompensationsschleife der Auswerteschaltung ein Offsetsignal phasenrichtig eingekoppelt wird, wodurch die Kompensationsschleife verstimmt wird. Es wird dann am Ausgang des Sensors bzw. der Auswerteschaltung eine Uberlagerung von Drehrate und Offset angezeigt, aus der die Funktionsfahigkeit direkt erkennbar wird.

Weitere Vorteile der Erfindung werden mit Hilfe der in den abhängigen Ansprüchen angegebenen Maßnahmen erzielt. Dabei ist besonders vorteilhaft, dass die Aufschaltung des Offsets uber die Betätigung eines Testeinganges erfolgen kann, wodurch der Sensor bei bekannter Verstimmung testbar wird. Es ist dabei ein umfangreicher Test möglich, da die Testfunktion durch die Schleifenanordnung sowohl die Auswerteelektronik als auch das Sensorelement selbst auf Fehlfunktion testet. Das Einkoppeln einer Störgröße, die einer fest eingestellten Drehrate entspricht, einer sogenannten BITE-Funktion hat den Vorteil, daß der Sensorausgang aufgrund der Störgröße vom Empfindlichkeitsabgleich unabhängig ist.

Zeichnung

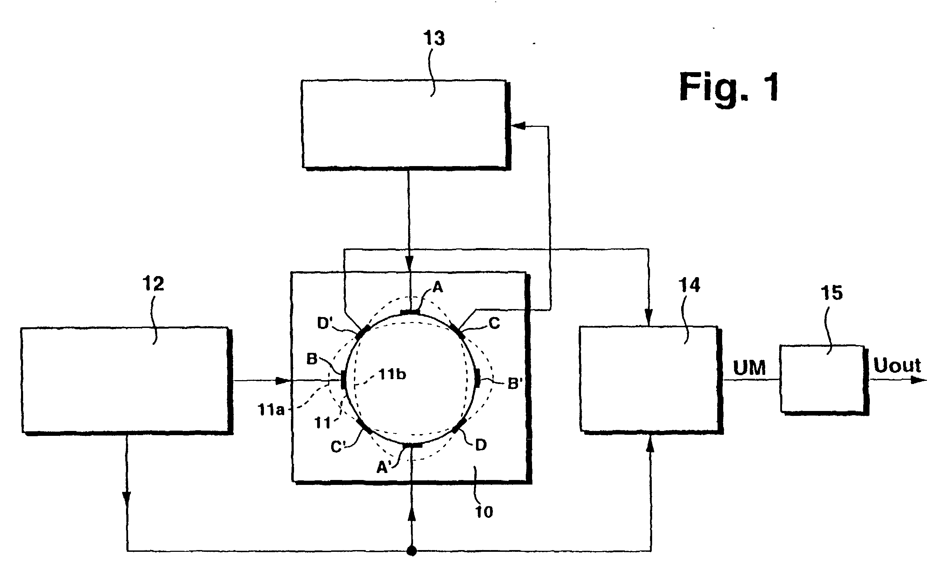

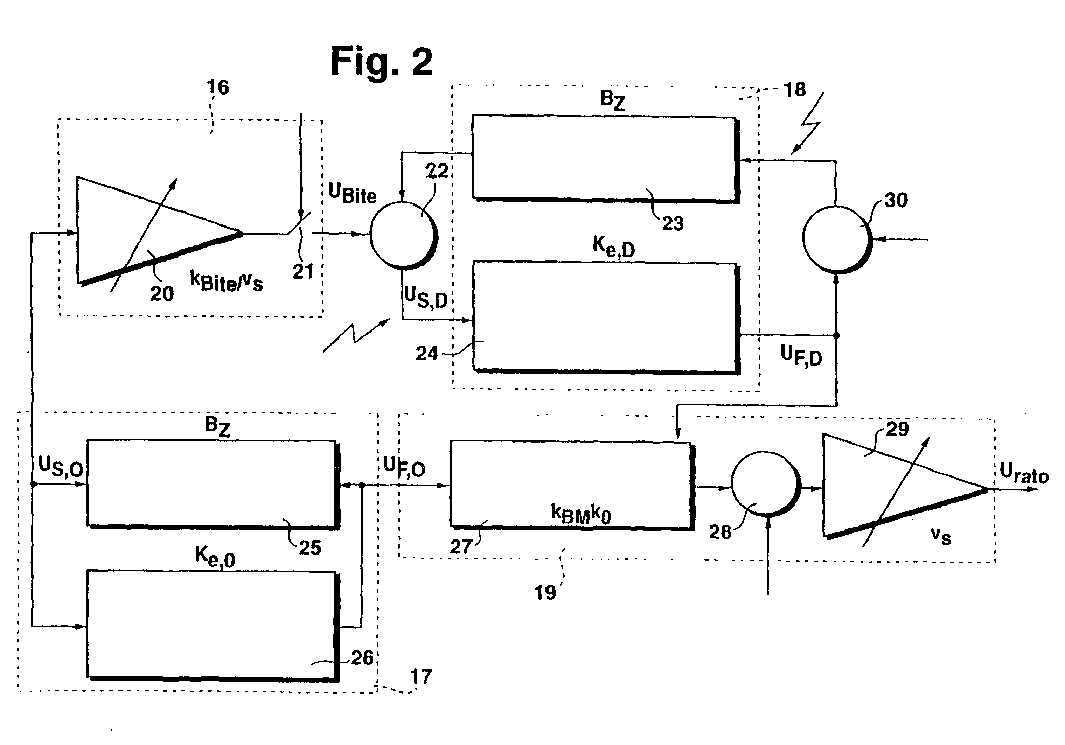

Die Erfindung ist in der Zeichnung dargestellt und wird in der nachfolgenden Beschreibung näher erläutert. Es zeigt dabei im einzelnen Figur 1 eine Sensoranordnung samt Auswerteschaltung, wie sie aus der US-PS 4 759 220 bekannt ist und Figur 2 das Ausführungsbeispiel einer erfindungsgemäßen Auswerteschaltung, die eine Überprüfung der Funktionsfähigkeit des Sensors sowie der Auswerteschaltung selbst erlaubt.

Beschreibung des Ausführungsbeispiels

In Figur 1 ist der Sensor mit 10 bezeichnet. Der Hohlzylinder 11 des Sensors 10 trägt die einzelnen Meßelemente A, A', B, B', C, C' und D, D'. Gestrichelt sind die Verformungen eingezeichnet, die der Hohlzylinder 11 aufgrund von Schwingungen einnehmen kann.

Die Meßelemente A, B, C, D sind mit den Blöcken 12, 13, 14 der Elektronik verbunden, dabei bezeichnet 12 die Oszillatorschleife (Drivekreis), die ein geeignetes Sensorelement in eine konstante mechanische Antriebsschwingung versetzt. Mit 13 ist eine Dämpfungsschaltung bezeichnet und 14 stellt den Detektorschaltkreis dar, an dessen Ausgang das Meßsignal um entsteht, das im Filter 15 noch in geeigneter Weise gefiltert wird, so daß das eigentliche Ausgangssignal Uout erhalten wird.

Mit der in Figur 1 dargestellten Sensoranordnung samt Elektronik eines Drehratensensors, der nach dem Prinzip eines Vibrationsgyrometers arbeitet, kann die Giergeschwindigkeit bzw. die Gierrate eines Fahrzeuges ermittelt werden. Dabei bewirkt der Corioliseffekt zusammen mit einer senkrecht zur Antriebsschwingung eingekoppelten Drehgeschwindigkeit eine Coriolisbeschleunigung, die eine Auslenkung der Antriebsschwingung in Coriolisrichtung zur Folge hat. Diese Auslenkung ist letztendlich ein Maß für die eingekoppelte Drehrate und soll gemessen werden.

In Figur 2 ist die Auswerteschaltung einer erfindungsgemäßen Lösung dargestellt. Bei dieser Lösung sind der Sensor sowie die zugehörige Elektronik miteinander verkoppelt. Im wesentlichen umfaßt die dargestellte Anordnung vier Blöcke. Der erste Block 16 ist der sogenannte BITE-Block, die Oszillatorschleife ist mit 17 bezeichnet, die Dämpfungsschleife mit 18 und die Ausgangsstufe trägt das Bezugszeichen 19.

Die in der Figur 2 enthaltenen Blöcke 16 bis 19 sind ihrerseits in weitere Blöcke unterteilt. Die Wechselwirkungen zwischen den einzelnen Blöcken sind durch entsprechende Verbindungslinien, gegebenenfalls unter Angabe der Wirkungsrichtung durch entsprechende Pfeile gekennzeichnet. Im einzelnen umfaßt der BITE-Block 16 einen Verstärker 20 mit variabler Verstärkung, in dem die BITE-Funktion generiert wird. Diese Funktion wird symbolisiert durch den Ausdruck $k_{BITE}/v_s$. Sie wird über den BITE-Schalter 21 als BITE-Störgröße $U_{BITE}$ bei Auslösen eines Tests BITE-Test an den Punkt 22 weitergegeben.

Dieser Punkt 22 steht mit den Blöcken 23, 24 der Dämpfungsschleife 18 in Verbindung. Der Block 23 bezeichnet die mechanische Kopplung (des Zylinders und der Meßelemente, also beispielsweise der Piezo-Elemente). Die Übertragungsfunktion des Sensorelementes ist mit $B_z$ bezeichnet.

Der Block 24 stellt eine elektronische Dämpfungsschleife mit Phasensteuerung aus der AFC und konstanter Verstärkung dar. Die zugehörige Übertragungsfunktion der elektronischen Dämpfungsschleife ist mit $k_{e,D}$ bezeichnet. Im Punkt 22 findet im übrigen die elektrische Nullpunkteinstellung statt. Die am Punkt 22 anstehende Spannung ist mit $U_{S,D}$ bezeichnet.

Von der Oszillatorschleife 17 sind zwei Blöcke 25, 26 dargestellt, die miteinander wechselwirken. Der Block 25 bezeichnet wiederum die mechanische Kopplung zwischen Zylinder und Piezoelementen. Die Übertragungsfunktion des Sensorelementes ist $B_z$. Die Spannung ist mit $U_{S,O}$ bezeichnet. Es ist dies die Sense-Spannung der Oszillatorschleife, die Spannung der Anregung des Systems, also die Treiberspannung ist mit $U_{F,O}$ bezeichnet, diese Spannung wird auch Force- oder Drivespannung genannt.

Block 26 bezeichnet die elektronische Anregungsschleife mit Phasenregler (AFC) und Amplitudenregler (AGC). Die zugehörige Übertragungsfunktion der Oszillatorschleife ist mit $k_{e,O}$ bezeichnet.

Am Verbindungspunkt zwischen den Blöcken 25 und 26 liegt die Antriebsspannung bzw. Force- oder Drivespannung $U_{F,O}$, die dem Block 27 zur phasenrichtigen Gleichrichtung bzw. synchronen Demodulation und konstanten Verstärkung der Ausgangsstufe 19 zugeführt wird. Block 27 erhält weiterhin die Spannung $U_{F,D}$ aus der Dämpfungsschleife 18. Die Übertragungsfunktion des Blocks 27 ist mit $k_{BM} \cdot k_0$ bezeichnet. Am Ausgang des Blocks 27 ist ein Punkt 28 eingetragen, an dem der Offsetabgleich stattfindet. An den Punkt 28 schließt sich ein Verstärker 29 mit variabler Verstärkung an, die Verstärkung ist mit $v_s$ bezeichnet. Am Ausgang des Verstärkers 29 ist die Drehratenausgangsspannung $U_{rate}$ abgreifbar, die ein Maß für die tatsächlich vorhandene Drehrate ist.

Die mechanische Nullpunkteinstellung erfolgt an Punkt 30. Zu dieser Nullpunkteinstellung wird eine Spannung $U_{cor}$ als elektrisches Äquivalent des Corioliseffektes eingespeist.

Mit der in Figur 2 als Blockschaltbild angegebenen Anordnung läßt sich der Drehratensensor auswerten und gleichzeitig eine Überprüfung der ordnungsgemäßen Funktionsfähigkeit des Sensors und der Auswerteschaltung selbst realisieren.

Wird durch die amplitudengeregelte Oszillatorschleife ein geeignetes Sensorelement, das sich auf dem Hohlzylinder befindet, in eine konstante mechanische Antriebsschwingung versetzt, dann bewirkt der Corioliseffekt zusammen mit einer senkrecht zur Antriebsschwingung eingekoppelten Drehschwingung eine Coriolisbeschleunigung, die eine Auslenkung der Antriebsschwingung in Coriolisrichtung zur Folge hat. Es wird durch diese Effekte der Hohlzylinder, auf dem die als Meßelemente dienenden Piezoelemente angeordnet sind, zusätzlich in Schwingungen versetzt. Der Hohlzylinder schwankt wegen der Anregungen durch den Oszillator zwischen den in Figur 1 gestrichelt eingezeichneten Grenzen.

Wird zur Auswertung der Auslenkung, die wie bereits erwähnt ein Maß für die eingekoppelte Drehrate ist, eine Kompensationsschleife verwendet, beispielsweise eine Servo-Loop, dann ist die resultierende Stellgröße ein Maß für die zu messende Drehrate. Wird diese Kompensationsschleife mit einem phasenrichtig eingekoppelten Offsetsignal verstimmt, wird der Ausgang des Sensors die Überlagerung von Drehrate und Offset anzeigen. Erzeugt wird dieser Offset im BITE-Block. Die Aufschaltung des Offsets kann beispielsweise über die Betätigung des BITE-Schalters 21 erfolgen, es wird dann der Sensor bei bekannter Verstimmung testbar. Da die Testfunktion durch die Schleifenanordnung sowohl die Auswerteelektronik als auch das Sensorelement betrifft, können beide auf Fehlfunktion getestet werden.

Die Ableitung der am Ausgang des Sensors entstehenden Spannung $U_{rate}$ bei aktivierter BITE-Funktion kann anhand der folgenden Überlegungen für ein Vibrationsgyrometer mit amplitudengeregelter Oszillatorschleife, bei dem ein Sensorelement in eine konstante mechanische Antriebsschwingung versetzt wird, erfolgen. Diese Antriebsschwingung weist die Geschwindigkeit $v_0$ auf, sie ist proportional zur Antriebsspannung der Oszillatorschleife $U_{F,O}$.

Für die Oszillatorschleife gilt:

$$k_Z \cdot k_{e,O} = 1$$

$$|k_Z| \cdot |k_{e,O}| = 1$$

$$arc(k_Z) + arc(k_{e,O}) = 0°$$

$$|U_{F,O}| = const(AGC\text{-}Funktion; Anregung)$$

$$v_O \sim U_{F,O}$$

$$arc(v_O) = arc(U_{F,O})$$

$$U_{S,O} = k_Z \cdot U_{F,O}$$

Das Masselement, das sich in einer amplitudengeregelten Antriebsschwingung befindet und eine bestimmte aktuelle Geschwindigkeit aufweist, erfährt aufgrund einer Drehrate $\Omega$ eine Auslenkung in Coriolisrichtung, es wirkt die Kraft $F_c = 2\, m\, v_O \times \Omega$. Die Kompensationskraft bzw. Kompensationsspannung (Stellgröße $U_{F,D}$), die der Corioliskraft entgegenwirkt (Führungsregelung), ist ein Maß für die vorhandene Drehrate. Das Erfassen der Coriolisspannung $U_{S,D}$ und der Aufbau der Gegenspannung $U_{F,D}$ erfolgt in einer Kompensationsschleife (Dämpfungsschleife).

Die beiden Schleifen sind über das Sensorelement gekoppelt und arbeiten in dem beschriebenen Fall resonant (d.h. die Übertragungsfunktion $k_Z$ für Oszillator- und Dämpfungsschleife ist gleich).

Für die Dämpfungsschleife gilt:

$$|k_Z| \cdot |k_{e,D}| \gg 1$$

$$arc(k_Z) + arc(k_{e,D}) \approx -180°$$

$$U_{cor} = k_c \cdot \Omega \cdot U_{F,O}$$

$$U_{F,D}(\Omega)\, \frac{kZ \cdot ke,D}{+1 - k_Z \cdot k_{e,D}} \cdot U_{cor} \approx -U_{cor} = -k_c \cdot \Omega \cdot U_{F,O}$$

Die Führungsregelgung der Dämpfungsschleife funktioniert in gleicher Weise auch für eingekoppelte Störsignale BITE (Built in test, mit entsprechender Frequenz, Phasenlage). Durch das Einkoppeln einer Störgröße $U_{BITE}$ kann somit eine Drehrate simuliert werden. Das Einkoppeln erfolgt aus der Oszillatorschleife, was zusätzlich den Vorteil des Oszillatortests mit sich bringt.

Das Störsignal soll einer fest eingestellten Drehrate entsprechen, unabhängig von der am Bandende notwendigen Empfindlichkeitskorrektur des Komplettsensors. Dies wurde durch zwei Verstärkerstufen (eine in der BITE/Dämpfungs- und eine in der Ausgangsschleife) mit reziproker Verstärkung realisiert. Dies hat zur Folge, daß der Sensorausgang aufgrund der Störgröße $U_{rate}$(BITE) vom Empfindlichkeitsabgleich $v_S$ unabhängig ist.

Für BITE-Anordnung gilt:

$$U_{BITE} = \frac{k_{BITE}}{v_S} \cdot U_{S.O} = \frac{k_{BITE}}{v_S} \cdot k_Z \cdot U_{F,O}$$

$$U_{F,D}(BITE) = \frac{k_{e,D}}{1 - k_Z \cdot k_{e,D}} \cdot U_{BITE} = -U_{BITE} \cdot \frac{1}{k_Z}$$

$$U_{F,D}(BITE) = -\frac{k_{BITE}}{v_S} \cdot U_{F,O}$$

Der Ausgang des Sensors $U_{rate}$ zeigt bei aktiviertem BITE die Summe (Überlagerung) der aktuellen Drehrate $\Omega$ und der simulierten Drehrate, aufgrund der eingespeisten Störgröße.

$$U_{F,D} = U_{F,D}(BITE) + U_{F,D}(\Omega)$$

$$U_{F,D} = -\left(\frac{k_{BITE}}{v_S} \div k_c \cdot \Omega\right) \cdot U_{F,O}$$

$$U_{rate} = (k_{BM} \cdot k_0 \cdot |U_{F,D}| \cdot \cos(arc(U_{F,D} \cdot U_{F,O})) + U_{off}) \cdot v_s$$

$$U_{rate} = \left(-\left(\frac{k_{BITE}}{v_S} + k_c \cdot \Omega\right) \cdot (|U_{F,O}| \cdot k_{BM} \cdot k_0) \div U_{off}\right) \cdot v_s$$

$$U_{rate}(BITE) = -k_{BM} \cdot k_0 \cdot k_{BITE} \cdot |U_{F,O}| \neq f(v_S)$$

Das Aktivieren der Störgröße erfolgt durch Betätigung eines Testeinganges, wodurch der Sensor bei bekannter Verstimmung $U_{rate}$(BITE) testbar wird. Durch diesen Test ist sowohl die komplette Antriebs-, Dämpfungs-, Ausgangselektronik als auch das Sensorelement mit seinen Anschlüssen auf Fehlfunktionen prüfbar.

Zusammenfassung der Abkürzungen:

$k_Z$ =: Übertragungsfunktion des Sensorelements
$k_{e,XX}$ =: Übertragungsfunktion der Elektronik
$U_{S,XX}$ =: Abgriffspannung
$U_{F,XX}$ =: Antriebsspannung XX = O =: Oszillatorschleife (Anregung) XX = D =: Dämpfungsschleife (Kompensation)
$v_0$ =: Geschwindigkeit des Masseelements in Antriebsrichtung
$\Omega$ =: Drehrate
$U_{cor}$ =: elektrisches Äquivalent des Corioliseffekts
$k_c$ =: Corioliskonstante
$U_{BITE}$ =: BITE-Störgröße
$k_{BITE}$ =: BITE-Skalierungsfaktor

$k_{BM}$ =: Verstärkung des Balanced Modulator
$k_0$ =: Konstante Verstärkung Ausgangsstufe
$v_S$ =: variable Verstärkung der Ausgangsstufe (Empfindlichkeitsabgleich am Bandende)
$U_{off}$ =: Kompensationsspannung der Null-Drehrate (Offsetabgleich am Bandende)
$U_{rate}$ =: Drehratenausgangsspannung

**Patentansprüche**

1. Vorrichtung zur Ermittlung einer Drehrate mit einem Sensor, der mehrere Sensorelemente (A, A', B, B', C, C', D, D') aufweist, die auf einem schwingungsfähigen Körper (11) angeordnet sind mit einer geregelten Oszillatorschleife (17), die wenigstens eines der Sensorelemente (A, A', B, B', C, C', D, D') in konstante Schwingung versetzt, wodurch auch der schwingungsfähige Körper (11) angeregt wird, mit einer Dämpfungsstufe (13), die eine elektronische Dämpfungsschleife (18) mit Phasensteuerung umfaßt und mit wenigstens einem Sensorelement (A, A', B, B', C, C', D, D') und einer Ausgangsstufe (19) in Verbindung steht, wobei die Ausgangsstufe (19) mit wenigstens einem weiteren Sensorelement (A, A', B, B', C, C', D, D') in Verbindung steht und eine Ausgangsspannung abgibt, die ein Maß für die zu ermittelnde Drehrate ist und Mittel zur Erkennung einer Fehlfunktion (16, 20, 21) an den Eingang der Dämpfungsschleife (18) zuschaltbar sind, die durch Erzeugung eines Offsetsignales eine vorgebbare Verstimmung der Vorrichtung auslösen und zu einer Ausgangsspannung führen, die eine Überlagerung aus Drehrate und Offset ist und zur Fehlererkennung ausgewertet wird.

2. Vorrichtung nach Anspruch 1, **dadurch gekennzeichnet, daß** der schwingungsfahige Körper zylinderförmig ist und auf einer Seite freischwingend und auf der anderen Seite fest ist und die Sensorelemente in einer Spur gleichförmig auf der Zylinderoberfläche angeordnet sind.

3. Vorrichtung nach Anspruch 1 oder 2, **dadurch gekennzeichnet, dass** die Mittel zur Erzeugung eines Offsetsignales in der Sensorelektronik integriert sind und einen BITE-Block (16) umfassen, mit einem Verstärker (20) mit variabler Verstärkung sowie einem Schalter (21), über den das Offsetsignal weiterleitbar ist.

4. Vorrichtung nach Anspruch 3, **dadurch gekennzeichnet, dass** der Eingang des Verstärkers (20) des BITE-Blokkes (16) mit der Oszillatorschleife (17) in Verbindung steht, dass über diese Verbindung die am Eingang der Oszillatorschleife liegende Spannung ($U_{S,O}$) zugeführt wird, dass der BITE-Block (16) mit der Dampfungsschleife (18) in Verbindung steht und über diese Verbindung die Offsetspannung ($U_{BITE}$) der Dampfungsschleife (18) zugeführt wird.

5. Vorrichtung nach einem der vorhergehenden Anspruche, **dadurch gekennzeichnet, dass** eine elektronische Nullpunkteinstellung, eine mechanische Nullpunkteinstellung und/oder sowie ein Offsetabgleich durchfuhrbar sind.

6. Vorrichtung nach einem der vorhergehenden Anspruche, **dadurch gekennzeichnet, dass** die Oszillatorschleife (17) eine elektronische Anregungsschleife (26) mit Phasenregler und Amplitudenregler umfasst.

7. Vorrichtung nach einem der vorhergehenden Ansprüche, **dadurch gekennzeichnet, dass** die elektronische Dämpfungsschleife (18) mit dem Phasenregler (AFC) verbunden ist und mit konstanter Verstarkung arbeitet.

8. Vorrichtung einem der vorhergehenden Anspruche, **dadurch gekennzeichnet, dass** am Eingang des Ausgangsstufe (19) ein Block (27) mit Phasengleichrichter und konstanter Verstärkung liegt, der mit einer Oszillatorschleife (17) und der Dämpfungsschleife (18) in Verbindung steht, wobei uber diese Verbindungen die Spannungen ($U_{F,O}$) und ($U_{F,D}$) zugefuhrt werden, dass der Block (27) uber dem Punkt (28) zum Offsetabgleich mit einem Verstärker (29) mit variabler Verstärkung in Verbindung steht, uber den ein Empfindlichkeitsabgleich moglich ist und an dessen Ausgang die auszuwertende Spannung ($U_{rate}$) abgreifbar ist.

**Claims**

1. Device for determining a rate of rotation having a sensor, which has a plurality of sensor elements (A, A', B, B', C, C', D, D') arranged on an oscillatory body (11), having a regulated oscillatory loop (17), which causes at least one of the sensor elements (A, A', B, B', C, C', D, D') to effect constant oscillation, as a result of which the oscillatory body (11) is also excited, having an attenuation stage (13), which comprises an electronic attenuation loop (18) with phase control and is connected to at least one sensor element (A, A', B, B', C, C', D, D') and an output stage (19), the output stage (19) being connected to at least one further sensor element (A, A', B, B', C, C', D, D') and outputting an output voltage which is a measure of the rate of rotation to be determined, and means for identifying a malfunction (16, 20, 21) being able to be connected up to the input of the attenuation loop (18), which, by generating an offset signal, initiate a predeterminable detuning of the device and lead to an output voltage which is a superposition of rate of rotation and offset and is evaluated for fault identification purposes.

2. Device according to Claim 1, **characterized in that** the oscillatory body is cylindrical and oscillates freely on one side and is fixed on the other side, and the sensor elements are arranged in a track uniformly on the cylindrical surface.

3. Device according to Claim 1 or 2, **characterized in that** the means for generating an offset signal are integrated in the sensor electronics and comprise a BITE block (16), having a variable-gain amplifier (20) and also a switch (21), via which the offset signal can be forwarded.

4. Device according to Claim 3, **characterized in that** the input of the amplifier (20) of the BITE block (16) is connected to the oscillator loop (17), **in that** the voltage ($U_{S, O}$) present at the input of the oscillator loop is fed via this connection, **in that** the BITE block (16) is connected to the attenuation loop (18) and the offset voltage ($U_{BITE}$) is fed to the attenuation loop (18) via this connection.

5. Device according to one of the preceding claims, **characterized in that** an electronic zero setting, a mechanical zero setting and/or an offset adjustment, too, can be carried out.

6. Device according to one of the preceding claims, **characterized in that** the oscillator loop (17) comprises an electronic excitation loop (26) with phase regulator and amplitude regulator.

7. Device according to one of the preceding claims, **characterized in that** the electronic attenuation loop (18) is connected to the phase regulator (AFC) and operates with a constant gain.

8. Device according to one of the preceding claims, **characterized in that** there is present at the input of the output stage (19) a block (27) with phase rectifier and constant gain, which is connected to an oscillator loop (17) and the attenuation loop (18), the voltages ($U_{F,O}$) and $U_{F,D}$) being fed via these connections, **in that** the block (27) is connected via the point (28) for offset adjustment to a variable-gain amplifier (29), by means of which a sensitivity adjustment is possible and at whose output the voltage ($U_{rate}$) to be evaluated can be tapped off.

## Revendications

1. Dispositif pour déterminer une vitesse de rotation à l'aide d'un capteur composé de plusieurs éléments de capteur (A, A', B, B', C, C', D, D'), installés sur un corps (11) susceptible de vibrer, comprenant :

   - une boucle d'oscillateur (17), régulée, mettant au moins l'un des éléments de capteur (A, A', B, B', C, C', D, D') dans une oscillation constante, pour exciter le corps (11) susceptible de vibrer,
   - un étage d'amortissement (13) comprenant une boucle d'amortissement électronique (18) avec une commande de phase, et en liaison avec au moins un élément de capteur (A, A', B, B', C, C', D, D') et un étage de sortie (19),

   dispositif dans lequel l'étage de sortie (19) est relié à au moins un autre élément de capteur (A, A', B, B', C, C', D, D), et fournit une tension de sortie qui est une mesure de la vitesse de rotation à obtenir, et des moyens pour détecter un défaut de fonctionnement (16, 20, 21) peuvent être branchés à l'entrée de la boucle d'amortissement (18), ces moyens générant un signal de décalage pour déclencher un désaccord prédéterminé du dispositif et aboutir à une tension de sortie qui est la combinaison de la vitesse de rotation et du décalage et est exploitée pour la détection du défaut.

2. Dispositif selon la revendication 1,
   **caractérisé en ce que**
   le corps vibrant est de forme cylindrique, d'un côté il peut vibrer librement et de l'autre côté il est fixe, et les éléments de capteur sont installés sur une trace, régulièrement à la surface du cylindre.

**3.** Dispositif selon la revendication 1 ou 2,
**caractérisé en ce que**
les moyens de détection d'un signal de décalage sont intégrés dans l'électronique du capteur et comprennent un bloc BITE (16), avec un amplificateur (20) d'amplification variable et un commutateur (21) pour transmettre le signal de décalage.

**4.** Dispositif selon la revendication 3,
**caractérisé en ce que**
l'entrée de l'amplificateur (20) du bloc BITE (16) est relié à la boucle d'oscillateur (17) et par cette liaison, on applique la tension (Us, o) reliée à l'entrée de la boucle d'oscillateur, le bloc BITE (16) étant relié à la boucle d'amortissement (18) et la tension de décalage ($U_{BITE}$) est appliquée à la boucle d'amortissement (18) par cette liaison.

**5.** Dispositif selon l'une des revendications précédentes,
**caractérisé par**
un réglage électronique du point zéro, un réglage mécanique du point zéro et/ou une compensation du décalage.

**6.** Dispositif selon l'une des revendications précédentes,
**caractérisé en ce que**
la boucle d'oscillateur (17) comprend une boucle d'excitation électronique (26) avec un régulateur de phase et un régulateur d'amplitude.

**7.** Dispositif selon l'une des revendications précédentes,
**caractérisé en ce que**
la boucle d'amortissement électronique (18) est reliée à un régulateur de phase (AFC) et travaille avec une amplification constante.

**8.** Dispositif selon l'une des revendications précédentes,
**caractérisé en ce que**
l'entrée de l'étage de sortie (19) est reliée à un bloc (27) comprenant un redresseur de phase et un amplificateur constant reliés à une boucle (17) d'oscillateur et à la boucle d'amortisseur (18), ces liaisons fournissant les tensions ($U_{F, O}$) et ($U_{F,D}$), et
pour compenser le décalage, le bloc (27) est relié par le point (28) à un amplificateur (29) d'amplification variable qui permet d'équilibrer la sensibilité et dont la sortie fournit la tension à exploiter ($U_{rate}$).

Fig. 1

# Fig. 2

EP 0 800 642 B1